# EUROPÄISCHE PATENTSCHRIFT

(11) **EP 0 475 467 B1**
(45) Veröffentlichungstag und Bekanntmachung des Hinweises auf die Patenterteilung: **10.07.1996**
(21) Anmeldenummer: 91120013.7
(22) Anmeldetag: 30.04.1987
(51) Int. Cl.: B01D 45/16, B01D 53/24, B01D 17/038, B04C 5/13

(54) **Wirbelkammerabscheider**
Swirl chamber separator
Séparateur à chambre de tourbillonnement

(30) Priorität: 09.05.1986 DE 3615747
(43) Veröffentlichungstag der Anmeldung: 18.03.1992
(62) Teilanmeldung aus: 87106289.9
(73) Patentinhaber: Bielefeldt, Ernst-August, Dipl.-Ing., D-24582 Bordesholm (DE)
(72) Erfinder: Bielefeldt, Ernst-August, Dipl.-Ing., D-24582 Bordesholm (DE)
(74) Vertreter: Schmidt-Bogatzky, Jürgen, Dr. Ing.

(56) Entgegenhaltungen:
- DE-A- 2 160 415
- DE-A- 2 538 664
- DE-A- 2 832 097
- DE-A- 3 203 498
- DE-C- 926 647
- US-A- 3 535 850

## Beschreibung

Die Erfindung betrifft einen Wirbelkammerabscheider zum Trennen und/oder Abscheiden von festen und/oder flüssigen Partikeln (disperse Phase) aus gasförmigen und/oder flüssigen Medien (kontinuierliche Phase) sowie zum Trennen von gemischten Gasen (Gas-Gas-Trennung) und/oder gemischten Flüssigkeiten (Flüssig-Flüssig-Trennung) sowie zum Sichten und/oder Klassieren, mit mindestens einer Wirbelkammer mit einer scharfen Abströmkante am Eingang des Hauptströmungskanals in die Wirbelkammer und jeweils zwei Tauchrohren, die koaxial zueinander und parallel zur Abströmkante in der Wirbelkammer angeordnet sind, sich jeweils von deren Endwänden aufeinander zuerstrecken und mit einem Reingasauslaß in Verbindung stehen und einen sich erweiternden Auslauf aufweisen, wobei in dem Wirbelkammerabscheider, in dem ein Fliehkraftfeld erzeugt wird, aus dem der spezifisch leichtere Anteil durch zwei in den Wirbelkammerabscheider koaxial und spiegelbildlich zu deren Mittelebenen hineinragende Tauchrohre innerhalb des Zentralbereiches des Wirbelkammerabscheiders abgesaugt wird.

Das Wirbeltrennverfahren als strömungsmechanisches Trennverfahren, bei dem Zentrifugalkräfte zum Trennen oder Abscheiden einer schweren dispersen Phase von einer leichteren, kontinuierlichen, strömungsfähigen Trägerphase aus Aerob- und/oder Hydrodispersionen genutzt werden, ist an sich bekannt. In der DE-A-32 03 498 wird z.B. ein gattungsgemäßer Wirbelkammerabscheider beschrieben. Dieser hat jedoch wie auch andere bekannt gewordene Wirbelkammerabscheider den Nachteil, daß aufgrund von Strömungsverlusten in dem Wirbelkammerabscheider dessen Abtrennleistung bezogen auf den Energieeinsatz relativ gering ist und die zur Steigerung der Abtrennleistung häufig erforderlichen Mehrkammeranordnungen ein relativ großes Bauvolumen haben. Hierdurch ist der Einsatzbereich der bekannten Wirbelkammerabscheider begrenzt.

Nach der US-A-35 35 850 ist ein weiterer Wirbelkammerabscheider bekannt, bei dem der Luftstrom senkrecht zur Mittelachse des Tauchrohrs in das Gehäuse eingeführt, dann um 90° (ohne Berücksichtigung von Strömungsablenkungen durch Wirbelbildungen) umgelenkt in das Gehäuse eintritt, in dem er vor dessen Mitte erneut um 180° umgelenkt und dann in das zugehörige Tauchrohr geführt wird. Bei diesem Wirbelkammerabscheider besteht der Nachteil, daß durch Wirbelbildungen Strömungsablenkungen auftreten, die zu erheblichen Strömungsverlusten und damit einer Verminderung der Abtrennleistung führen.

In der nicht vorveröffentlichten europäischen Patentanmeldung EP-A-0249023 mit gleichem Anmeldetag wie diese europäische Patentanmeldung wird ein gattungsgemäßer Wirbelkammerabscheider beschrieben, dessen Tauchrohre einen sich kontinuierlich erweiternden Querschnitt aufweisen. Bei diesem Wirbelkammerabscheider wird bei der Drehimpulseinleitung die Kontaktzone zwischen der Hauptströmung und dem Wirbel so zur festen Zylindermantelbegrenzung eingestellt, daß der tangentiale Eintrittspuls in die Bodenschichtströmung durch Verkleinerung des in der Wirbelkammer sekundär zirkulierenden Impulsanteils der Bodenschichtströmung vergrößert wird. Die Bodenschichtströmung wird rotationssymmetrisch bei konstanter oder annähernd konstanter mittlerer Hauptströmungsgeschwindigkeit ausgebildet und die Wandschichtströmung des Wirbels in der Wirbelkammer und der Hauptströmung im Hauptströmungskanal und der Abströmkante so konkav gekrümmt zugeführt, daß die senkrechten Sekundärgeschwindigkeiten beidseitig der Abströmkante gleichsinnig gerichtet und örtlich gleich groß sind. Der Reingasstrom wird durch die Tauchrohre so geführt, daß in Zonen höchster Strömungsgeschwindigkeit die Strömung nur mit schwachen Meridianflußumlenkungen belastet wird. Der Reingasstrom an der Außenwand der Tauchrohre wird mit zu den Einlaßabschnitten steigender Geschwindigkeit geführt, wobei in den Tauchrohren eine Ringströmung erzeugt wird, die in der Austrittszone des Tauchrohrs nach Umlenkung durch Leitschaufeln in eine Quellströmung mit geringer Strömungsgeschwindigkeit am Austritt umgewandelt wird. Bei diesem Wirbelkammerabscheider wird bei Verminderung der Strömungsverluste die Abtrennleistung der Wirbelkammern verbessert. Gleichzeitig läßt sich ein Wirbelkammerabscheider so ausbilden, daß bei verkleinertem Bauvolumen bei Mehrkammeranordnungen trotz gesteigerter Abtrennleistung eine Verringerung des Bauvolumens der Mehrkammeranordnung erzielt wird. Allerdings ist die Herstellung der Tauchrohre und damit der Wirbelkammern aufwendig.

Die Aufgabe der Erfindung besteht darin, einen Wirbelkammerabscheider der eingangs genannten Art so auszubilden, daß bei nicht völliger Optimierung der Reduzierung der Tauchrohrvertuste eine bauliche Vereinfachung erzielt wird.

Erfindungsgemäß erfolgt die Aufgabe durch die kennzeichnenden Merkmale des Anspruchs 1. Vorteilhafte Ausgestaltungen der Erfindung werden in den abhängigen Ansprüchen beschrieben.

Bei dem erfindungsgemäßen Wirbelkammerabscheider wird ebenfalls bei der Drehimpulseinleitung die Kontaktzone zwischen der Hauptströmung und dem Wirbel so zur festen Zylindermantelbegrenzung eingestellt, daß der tangentiale Eintrittsimpuls in die Bodenschichtströmung durch Verkleinerung des in der Wirbelkammer sekundär zirkulierenden Impulsanteils der Bodenschichtströmung vergrößert wird, daß die Bodenschichtströmung rotationssymmetrisch bei konstanter oder annähernd konstanter mittlerer Hauptströmungsgeschwindigkeit ausgebildet wird, daß die Wandschichtströmung des Wirbels in der Wirbelkammer und der Hauptströmung im Hauptströmungskanal der Abströmkante so konkav gekrümmt zugeführt wird, daß die senkrechten Sekundärgeschwindigkeiten beidseitig der Abströmkante gleichsinnig gerichtet und örtlich gleich groß sind, daß die Zonen höchster Strömungsgeschwindigkeit die Strömung nur mit schwachen Meridianflußumlenkungen belastet und daß der Reingasstrom an der Außenwand der Tauchrohre mit zu den Einlaßabschnitten steigender Geschwindigkeit geführt wird, wobei in den Tauchrohren eine Ringströmung erzeugt wird, die in der Austrittszone des Tauchrohrs nach Umlenkung durch Leitschaufeln in eine Quellströmung mit geringer Strömungsgeschwindigkeit am Austritt umgewandelt wird.

Vorteilhafte Ausgestaltungen der Erfindung werden in den abhängigen Ansprüchen beschrieben und anhand der in den Zeichnungen dargestellten Ausführungsbeispiele näher erläutert. Es zeigt
- Fig. 1: eine schematische Darstellung eines Wirbelkammerabscheiders in der Seitenansicht im Schnitt,
- Fig. 2: einen Wirbelkammerabscheider in einer Draufsicht im Schnitt,
- Fig. 3 und 4: schematische Darstellungen von Wirbelkammerabscheidern in der Draufsicht,
- Fig. 5: die Ausbildung der Abströmkante in einer Draufsicht,
- Fig. 6 bis 9: die Ausbildung weiterer Wirbelkammerabscheider in verschiedneen schematischen Ansichten,
- Fig. 10 bis 32: die Ausbildung von Mehrkammeranordnungen von Wirbelkammerabscheidern in verschiedenen Ansichten,

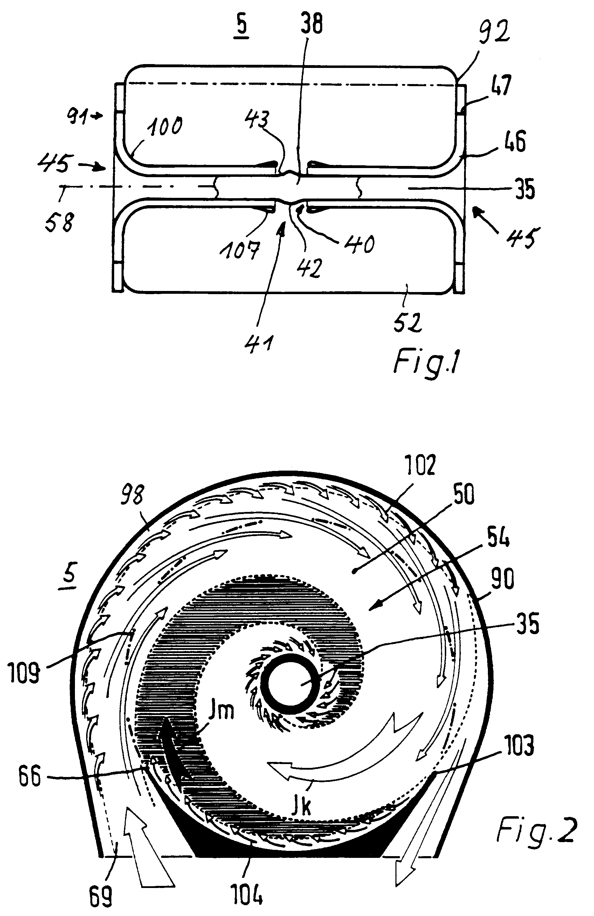

Fig. 1 zeigt einen Wirbelkammerabscheider 5, bei dem jeweils ein Abschnitt der Tauchrohre 35 zylindrisch ausgebildet ist und sich erst am Wirbelkammerboden 91, 92 erweitert. Die bei zylindrischen Tauchrohren vorhandene Erhöhung der örtlichen Drehimpulsverluste im Bodensenkenfluß wird bei diesen Tauchrohren 35 durch die Vergrößerung des Tauchrohrdurchmessers im Bereich der Wirbelkammerböden 91 , 92 vermindert. Vorteilhaft ist es, in den Tauchrohren 35 die Innenströmung durch einen Tauchrohrkern oder Diffusorinnenkörper 38 in eine Ringströmung umzuwandeln. Die beim Wirbelkammerabscheider 5 vorgesehenen Diffusorinnenkörper 38 sind mittels eines Leitkörpers 41 einstückig ausgebildet. Der Leitkörper 41 weist einen sich radial erstreckenden Wulst 42 auf, durch den den Tauchrohren 35 zugeordnete Strömungsleitflächen 43 ausgebildet werden. Um die örtlichen Druckverluste im Bereich der Einlaßöffnungen 40 der Tauchrohre 35 zu vermindern, sind die Tauchrohreinmündungen 107 lippenförmig ausgebildet. Durch die Diffusorinnenkörper 38 sind Ringspaltdralldiffusoren 46 ausgebildet. Diese enden an den Wirbelkammerböden 91, 92 des Abscheidergehäuses 52 so daß eine gegenüber bekannten Wirbelabscheidern geringere Baugröße erzielt wird. Im Austrittsbereich 45 des Ringspaltdralldiffusors 46 sind Umlenkschaufeln 47 angeordnet, die der Entdrallung der verzögerten Tauchrohrinnenströmung dienen. Die Umlenkschaufeln 47 können gekrümmte Blechschaufeln und/oder profiliert sein. Gegenüber der Verwendung von Spiralgehäusen ermöglicht die Verwendung von Umlenkschaufeln 47 eine Reduzierung der Baugröße des Wirbelkammerabscheiders 5. Es ist aber möglich, beim Austrittsbereich eines jeden Tauchrohres ein Spiralgehäuse als Dralldiffusor anzuordnen, in das jeweils ein Diffusorinnenkörper 38 tangential einmündet. Dieser Wirbelkammerabscheider 5 ist zwar hinsichtlich der Reduzierung von Tauchrohrdruckverlusten nicht optimiert hat dafür aber den Vorteil der baulichen Vereinfachung. Diese und die Reduzierung der Baugröße ist besonders für den Einsatz des Wirbelkammerabscheiders 5 bei Mehrkammeranordnungen von Wirbelkammerabscheidern von Vorteil, von denen Bespiele noch beschrieben werden.

Quer zur Mittelachse 58 der Tauchrohre 35 bildet sich ein Wirbel 54 aus. Im Bereich des Hauptströmungskanalbogens 90 (Fig. 2 ) bildet sich eine aus Meridiankomponenten bestehende Wandschichtströmung aus. Gleichzeitig befindet sich an dem Hauptströmungskanalbogen 90 die Grobabtrennzone 98, wobei die hier ausgeschiedenen Feststoffe durch in den Wirbelkammerböden 91, 92 auszubildende Austragsspalte 78 abgeführt werden können. Am Übergang von den Wirbelkammerböden 91, 92 zu den Tauchrohren 35 ist jeweils eine Feinabtrennzone ausgebildet.

Gegenüber zylindrischen Tauchrohren zeichnen sich die in Fig. 1 dargestellten trompetenartigen Tauchrohre 35 durch verschiedene Vorteile aus. Die sanftere Strömungsführung bei der Umlenkung des Meridianflusses führt zu geringeren radialen Drehimpulsverlusten und zu einer Verbesserung der Abtrennleistungen der Wirbelkammer 50 im Vergleich zu Wirbelkammern mit zylindrischen Tauchrohren. Bei Ausbildung der Tauchrohre 35 mit einer progressiv zunehmenden Wandkrümmung in Axialebenen am Austrittsabschnitt erfolgt eine weitere Reduktion der örtlichen Drehimpulsverluste, wobei in den Zonen höchster Strömungsgeschwindigkeiten die Strömung zusätzlich nur noch mit schwachen Meridianflußumlenkungen belastet wird. Die Wandströmung hat daher nur ein kleineres Wirbelvolumen anzutreiben. Hierdurch reduzieren sich dissipative Druckverlustanteile der Strömung. Dies hat zur Folge, daß von dem Ausgangsdrehimpuls, der sich aus einer im wesentlichen geraden Strömung bei nahezu tangentialem peripheren Eintritt in die kreisende Strömung entwickelt, mehr Impulsanteile zur Beschleunigung der Wandströmung freigegeben werden. Hierdurch erfolgt eine weitere Verbesserung der Abtrennleistung der Wirbelkammer 50. Die Volumenreduktion des Wirbelströmungsfeldes führt zu kürzeren Partikeltransportwegen für die in der Feinabtrennzone 100 abgetrennten Partikel in Axialebenen durch das Feld des Wirbels 54. Hierdurch können diese Partikel schneller aus der Wirbelkammer 50 abgeführt werden, wodurch der Trennprozeß vereinfacht wird. Die radiale Sekundärströmung 104 auf den Wirbelkammerböden 91, 92 wirkt wegen der kleinen einwärts gerichteten Verschiebungskräfte ebenfalls aufkonzentrierend. Dieses entsteht dadurch, daß die Partikel an dem Hauptströmungskanalbogen 90 des Hauptströmungskanals 69 etwa mit der dort vorhandenen Kontinuumsgeschwindigkeit bewegt werden und dadurch in die Zone des Bodensenkenflusses mit höherer Geschwindigkeit hineinströmen als sie dort selbst bewegt werden.

Die radiale Verkleinerung der ebenen Drehimpulstransportzone im Bereich der Wirbelkammerböden 91, 92 mit gleichzeitiger Beschränkung auf äußere Radienbereiche mit schwächeren Querschnittsminderungseinflüssen bewirkt eine Verminderung der örtlichen Drehimpulsverluste im Bodensenkenfluß. Im Ergebnis wird hiermit die für den Drehimpuls nachteilige Aufkonzentration reduziert. Die Flächen der Wirbelkammerböden 91, 92 bilden ferner abtrennunwirksame Zonen für die Sekundärströmung, da in dieser die Verschiebungskräfte für die Partikel mit dem Meridianfluß radial- und gleichgerichtet sind. Die Verkleinerung der abtrennungswirksamen Bodenflächen durch die Tauchrohre 35 erhöht somit die Trennwirksamkeit der Wirbelkammer 50. Gleichzeitig wird durch die Tauchrohre 35 mit veränderlichem Querschnitt eine Vergrößerung der hochtrennwirksamen Feinabtrennzonen 100 erzielt. Die Abtrennwirkung beginnt am ebenen Meridianströmungsende dort, wo die Wandprofilkrümmung der Tauchrohre 35 einsetzt.

In der Feinabtrennzone 100 herrscht Querstromtrennung vor, die sehr schnell einsetzt und sich dann mit ortsabhängig abnehmendem Tauchrohrdurchmesser erheblich verstärkt. Hierdurch wird im Ergebnis eine Verminderung der Partikelkonzentration in dem Reingasvolumenstrom 96 erzielt. Gleichzeitig werden durch die schnellere örtliche Konzentrationminderung die örtlichen Drehimpulsverluste in diesem Bereiche des Strömungsfeldes vermindert. Dieses ermöglicht örtlich höhere Drehgeschwindigkeiten, was wiederum die Konzentrationsminderung beschleunigt. Insgesamt ergibt somit die zu Fig. 1 beschriebene Ausgestaltung von Tauchrohren 35 sich zyklisch unterstützende strömungs- und trennmechanische Verbesserungen in der Feinabtrennzone, die sich in höheren Abtrenn- und Abscheideleistungen der Wirbelkammer 50 bei geringerem Druckverlust im Vergleich zur Verwendung von zylindrischen Tauchrohren auszeichnet.

Von besonderer Bedeutung ist die Anordnung der Kontaktzone 109 zwischen der Hauptströmung im Hauptströmungskanal 69 und dem Wirbel 54. Die Lage der Kontaktzone 109 beeinflußt die Drehstärke des Wirbelfeldes und damit die Steigerung der Trenn- und Abscheidewirksamkeit der Wirbelkammer 50. Während in der Wirbelkammer 50 in der Feinabtrennzone 100 an der Außenwandung der Tauchrohre 35 hohe Drehgeschwindigkeiten der Strömung angestrebt werden, muß die hohe kinetische Strömungsenergie der Strömung in den Tauchrohren 35 vor Austritt der Strömung aus diesen in Druck zurückverwandelt werden. Besonders vorteilhaft ist es, Wirbelkammern 50 so auszubilden, daß die ideelle Mantelfläche der Kontaktzone 109 im Verhältnis zu dem Zylindermantel der Wirbelkammer 50 groß ausgebildet ist. Die hierdurch bedingten größeren Hauptströmungsumlenkungen bewirken geringere Strömungsverluste bei der Drehimpulseinleitung. Die Drehimpulseinleitungsverluste entstehen aus der Mischung der Impulsanteile Iₖ und Iₘ. Iₖ ist der Impulsanteil der Bodenschichtströmung, der als antreibender Drehimpuls aus der energiereichen Hauptströmung in die Wirbelkammer eintritt. I ₘ ist ein innerhalb der Wirbelkammer 50 sekundär zirkulierender bremsender Impulsanteil der Bodenschichtströmung. Beide Impulsanteile durchdringen die Bodenschichtströmung in spiralig sich verengenden Zonen mit fortlaufendem Impulsstärkenausgleich durch Vermischung. Eine große relative Kontaktbogenlänge bewirkt daher eine Vergrößerung der Iₖ -Zonen und Verkleinerung der Iₘ -Zonen, wodurch am Tauchrohr 35 größere Drehgeschwindigkeiten erzielt werden (Fig. 2).

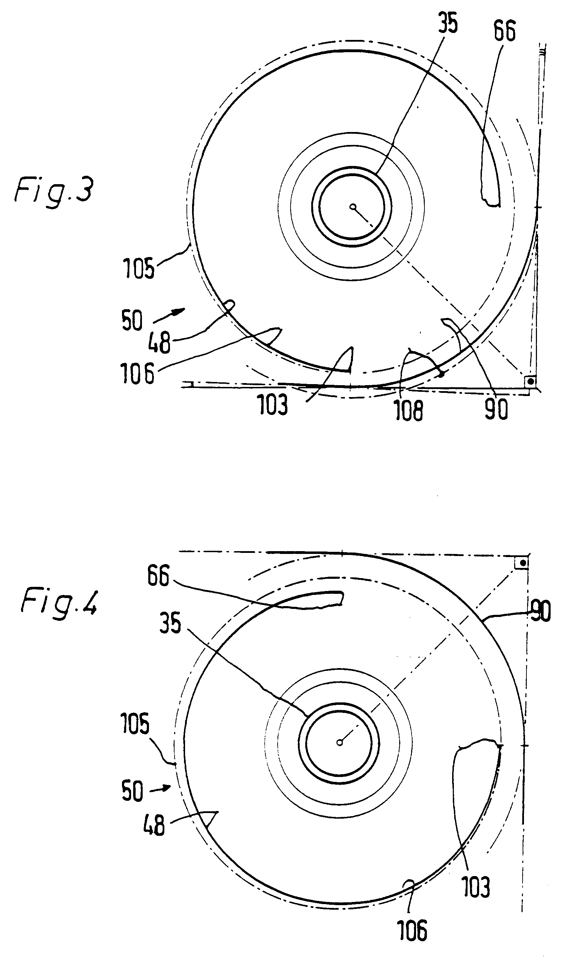

Zur Vermeidung von Impulsmischverlusten in der Antriebsströmung im Hauptströmungskanal 69 ist eine Rotationsymmetrie der Strömung auf der Kontaktzone 109 anzustreben. Hierzu ist der Hauptströmungskanalbogen 90 und damit der Hauptströmungskanalmantel wie eine logarithmische Spirale gekrümmt (Fig. 2 und 3). Die örtlichen Strömungsquerschnitte des Hauptströmungskanals 69 nehmen in Hauptströmungsrichtung gleichmäßig so ab, daß in dem Hauptströmungskanal 69 eine konstante oder zumindest annähernd konstante mittlere Hauptströmungsgeschwindigkeit erhalten wird. Dies bewirkt dann konstante oder annähernd konstante Umfangsgeschwindigkeiten an der Peripherie des Wirbels 54 im Bereich der Kontaktzone 109. Weiterhin werden in der Bodenschichtströmung rotationssymmetrische bzw. weitgehend rotationssymmetrische Umfangs- und Radialgeschwindigkeitsverteilungen erzielt. Statt einer logarithmischen Spiralkrümmung des Mantels 90 des Hauptströmungskanals 69 kann auch eine andere Spiralkrümmung vorgesehen sein. Zur weiteren Verbesserung der Trenn- und Abscheidewirksamkeit des Wirbels 54 ist auch der Zylindermantel 48 der Wirbelkammer 50 spiralig gekrümmt ausgebildet. Der Wirbelkammerbogen 106 kann hierbei eine spiralige, z. B. logarithmisch spiralige, Krümmung aufweisen. Hierdurch werden die Mantelwandimpulsverluste der Sekundärzirkulationsströmung im durch den Zylindermantel 48 gebildeten Wirbelgehäuse vermindert. In Fig. 3 sind die spiraligen Krümmungen des Hauptströmungskanalbogens 90 und des Wirbelkammerbogens 106 im Vergleich zu dem Bezugskreis 108 des Hauptströmungskanalbogens und dem Bezugskreis 105 der Wirbelkammer 50 dargestellt. Besonders vorteilhaft ist es, daß durch die spiralige Krümmung des Zylindermantels 48 die Hauptströmung von der Anströmkante 103 angeschnitten wird. Hierdurch wird ein Teil der energiereichen Hauptströmung über die gesamte Länge der Anströmkante 103 dem Wirbel 54 zugeführt, der hierdurch einen antreibenden Drehströmungsimpuls auch am Wirbelkammermantel erhält. Durch die spiraligen Krümmungen des Zylindermantels 90 des Hauptströmungskanals 69 sowie des Zylindermantels 48 der Wirbelkammer 50 kann eine weitgehende Rotationssymmetrie der gesamten Wirbelkammerdrehströmung erzeugt werden, die von der Wirbeldrehachse ausgeht, die der Mittelachse 58 des Wirbels entspricht. Da nur ein Teil des Sekundärvolumenstromes als Reingasvolumenstrom 96 aus den Tauchrohren 35 abgesaugt wird, fließt der verbleibende Teil des Sekundärvolumenstromes aus der Tauchrohrringströmungszone verteilt radial nach außen zurück und verstärkt die Sekundärzirkulation. Neben einer Verstärkung des Drehimpulses erfolgt auch eine Verstärkung der Partikelabtrennung in der Feinabtrennzone 100 an den Tauchrohren 35 und des radialen Partikeltransports durch das Wirbelfeld. Bei direkt abscheidenden Wirbelkammern 50 mit Austragsspalten 78 an den Wirbelkammerböden 91, 92 sowie den Böden des Hauptströmungskanals 69 wird die Abscheideleistung erhöht, da durch den verstärkten Sekundärfluß die abscheidegünstigen Eckenströmungsgeschwindigkeiten erhöht werden.

Wie in Fig. 4 dargestellt, kann die Wirbelkammer 50 auch so ausgebildet sein, daß der Hauptströmungskanalbogen 90 kreisbogenförmig und nur der Wirbelkammerbogen 106 spiralig gekrümmt ist. Hierdurch sind Wirbelkammern 50 mit kürzeren Kontaktbogenlängen der Kontaktzone 109 möglich, was Vorteile bei der Gestaltung von Reihenschaltungen von Wirbelkammern 50 sowie bei der Fertigung bieten kann.

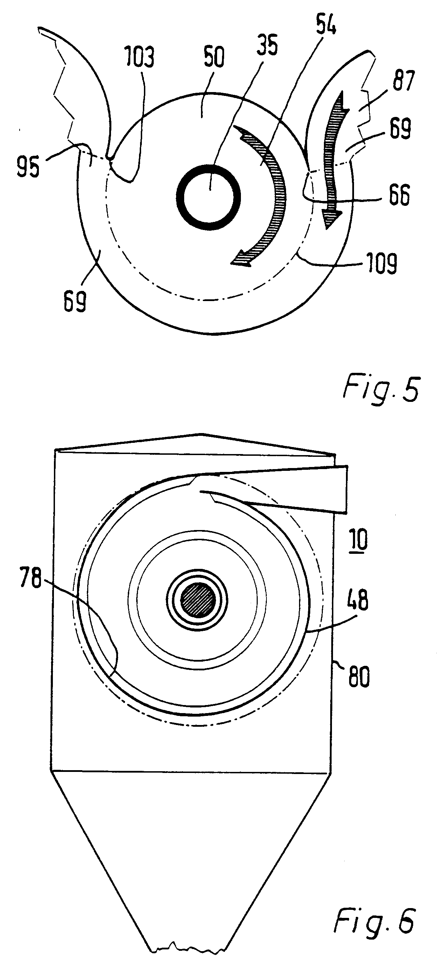

Um die an den Abströmkanten 66 von Wirbelkammern 50 üblicherweise entstehenden Wirbel und damit Strömungsverluste zu verringern ist es erforderlich, daß die senkrechten Sekundärgeschwindigkeiten beidseitig der Abströmkante 66 gleichsinnig gerichtet und örtlich gleich groß sind. Wie in Fig. 5 dargestellt, wird dies dadurch erreicht, daß auch die der Abströmkante 66 vom Hauptströmungskanal 69 zugeführte Wand eine konkave zylindrische Form aufweist. In diesem Fall fließen der Abströmkante 66 zwei konkav gekrümmte Wandschichtströmungen sowohl vom Wirbel 54 wie auch vom Hauptströmungskanal 69 her zu.

Um bei Direktabscheidern die Abscheideleistung zu erhöhen kann der Zylindermantel 48 der Wirbelkammer 50 spiralig gekrümmt wie z. B. logarithmisch spiralig gekrümmt ausgebildet sein (Fig. 6). Hierdurch wird die mittlere Eintrittsströmungsgeschwindigkeit in der Mantelwandschichtströmung als Umfangsgeschwindigkeit etwa konstant gehalten oder in Umfangsrichtung des Strömungsverlaufes noch erhöht, sofern die radialen Abstände der Mantelwandschichtströmung von der Wirbeldrehachse abnehmen. Der Einfluß der Wandreibungsabbremsung wird durch die spiralige Führung der Mantelwandschichtströmung mit abnehmendem Krümmungsradius kompensiert. Da durch die spiralige Ausbildung des Zylindermantels 48 die Eckströmungsgeschwindigkeiten an den Austragsspalten 78 erhöht werden, wird die Austrags- und Abscheidewirkung des Wirbelkammerabscheiders 10 ebenfalls erhöht.

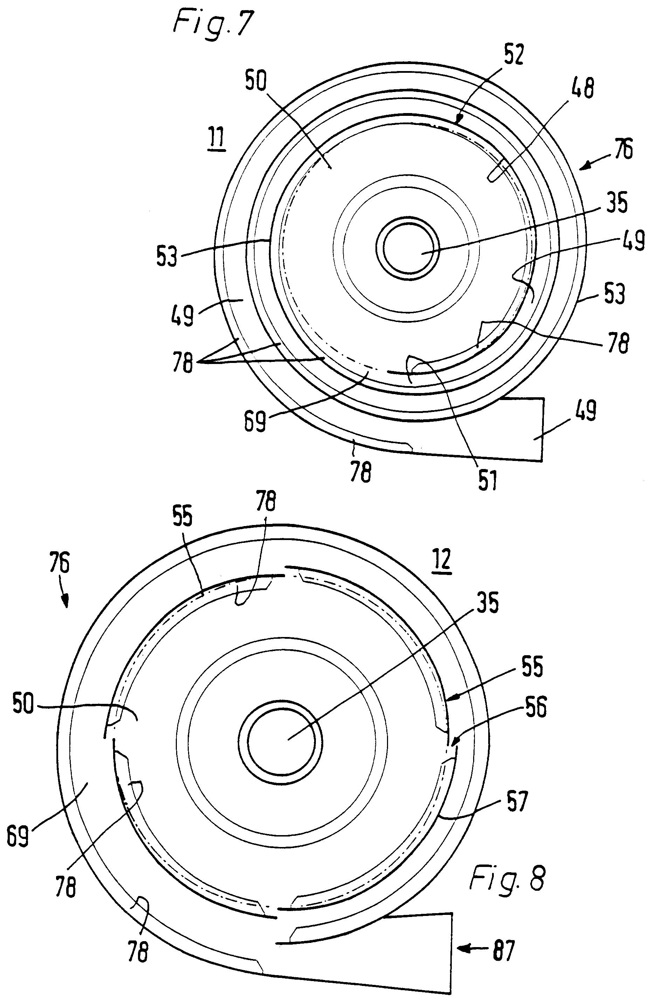

Es ist auch möglich, einen Spiraldirektabscheider 76 mit einem Vorabscheider zu versehen (Fig. 7). Hierzu ist vor der Hauptgasstromeinlaßöffnung des Hauptströmungskanals 69 ein Vorabscheiderkanal 49 vorgesehen, der die gleiche Bauhöhe wie das Abscheidergehäuse 52 hat. Im Regelfall ist der Vorabscheiderkanal 49 im Querschnitt rechteckig ausgebildet. An allen für die Hauptströmung konkaven Eckenströmungszonen des Vorabscheiderkanals 49 können Austragsspalte 78 vorgesehen sein, die die Vorabscheidung verstärken. Die rechteckigen Strömungsquerschnitte im Vorabscheiderkanal 49 können entweder konstant gehalten werden oder aber sich entsprechend den Spiralwindungen in Hauptströmungsrichtung kontinuierlich verengen. Hierdurch würde die Vorabscheiderströmung dann bis zum Eintritt in die mit einem spiraligen Zylindermantel 48 ausgestattete Wirbelkammer 50 beschleunigt, so daß sich die Abscheideleistung erhöht.

In Fig. 8 ist ein als Spiraldirektabscheider 76 ausgebildeter Wirbelkammerabscheider 12 dargestellt, bei dem das Rohgas über den Rohgaseintritt 87 der Wirbelkammer 50 über mehrere tangentiale Eintrittsspalte 56 zugeführt wird. Hierzu ist der Wirbel 54 durch Strömungsleitlamellen 57 von dem Hauptströmungskanal 69 distanziert. Die einzelnen Eintrittsspalte 56 sind jeweils zwischen zwei Strömungsleitlamellen 57 angeordnet, die in ihrer Gesamtheit ein Verteilergehäuse 55 bilden. Die Eintrittsspalte 56 sind parallel zur Wirbelachse angeordnet, haben gleiche Spaltweiten und erstrecken sich über die gesamte Bauhöhe der Wirbelkammer 50. Die Abtrenn- und Abscheideleistungen erhöhen sich mit der Anzahl der Eintrittsspalte 56. Die Strömungsleitlamellen 57 sind zweckmäßigerweise gleich ausgebildet. Sie können spiralig oder logarithmisch spiralig gekrümmt sein und werden so eingestellt, daß die einzelnen Mantelwandschichtströmungen nach dem Durchtritt durch einen Eintrittsspalt 56 in die Wirbelkammer 50 spiralig oder logarithmisch spiralig geführt werden. Sofern die Strömungsleitlamellen 57 umfangsmäßig relativ kurz sind, können sie als kreisbogenförmig gebogene zylindrische Bleche ausgebildet werden, die ebenfalls spiralig eingestellt werden. Hierdurch wird eine gewisse bauliche Vereinfachung des Wirbelkammerabscheiders 12 erzielt. Der Hauptströmungskanal 69 kann, wie in Fig. 8 dargestellt, so ausgebildet sein, daß eine umlaufende Verteilerströmung ausgebildet wird. Es ist aber möglich, die Spaltzahl und die Strömungsleitlamellen 57 so anzuordnen, daß die Verteilerströmung nach einem Umlauf oder weniger in einem Eintrittsspalt 56 endet. Darüber hinaus ist es möglich, den Hauptströmungskanal 69 so auszubilden, daß sich eine Umlaufströmung mit breiterer radialer Erstreckung ergibt. Durch die sich dann einstellenden Mehrfachumläufe der Strömung wird eine Strömungsbeschleunigung zwischen dem Eintritt und den Mehrfachaustritten erzielt, die gleichzeitig Spalteintritte für das Direktabscheiderwirbelgehäuse darstellen. Wie in Fig. 8 angedeutet, können an allen zu den örtlichen Primärströmungszonen konkav gekrümmten Eckenzonen sowohl im Wirbel wie auch im Verteilergehäuse in den ebenen Gehäuseböden Austragsspalte 78 ausgebildet sein, um die Abscheidewirkung der in diesen Ecken stark gekrümmten Sekundärschichtströmungen möglichst weitgehend zu nutzen. Der Spiraldirektabscheider kann über die Austragsspalte 78 mit einem Staubbunker 80 verbunden sein.

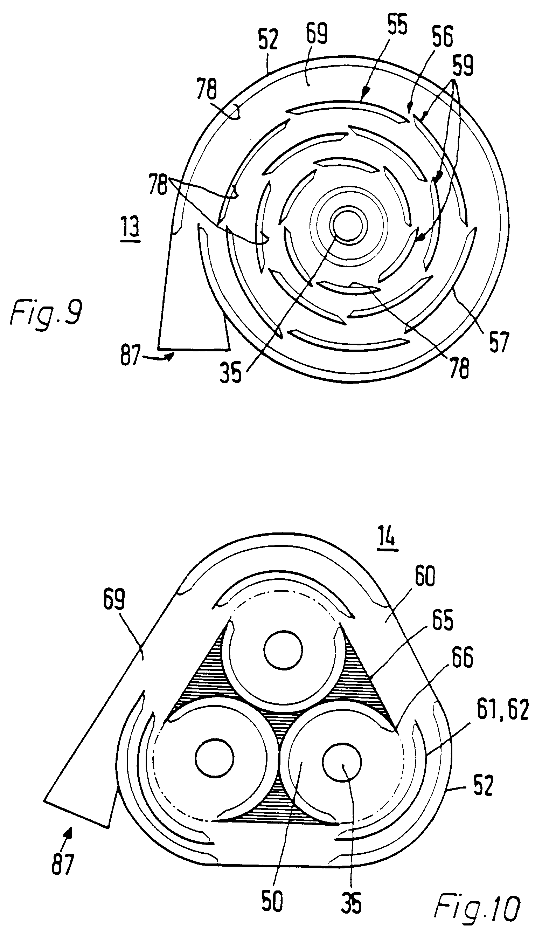

In Fig. 9 ist ein Wirbelkammerabscheider 13 dargestellt, bei dem in radialer Richtung zur Mittelachse 58 des Wirbels 54 diesen umgebend mehrere kreisförmige Leitschaufelkränze angeordnet sind. Diese haben unterschiedliche Bezugsradien und bestehen aus gleichmäßig verteilten gekrümmten Strömungsleitlamellen 57. Zwischen den einzelnen Strömungsleitlamellen 57 ist jeweils ein Eintrittsspalt 56 ausgebildet. An sämtlichen konkaven Strömungsecken einschl. der äußeren spiralig-zylindrischen Gehäuseummantelung können in den ebenen Gehäuseböden Austragsspalte 78 angeordnet sein, so daß im Verteilergehäuse 55 eine gesteigerte Staubaustragswirkung erzielt wird. Die Strömungsleitlamellen 57 können beim Wirbelkammerabscheider 13 als Blechschaufeln oder Leitbleche ausgebildet sein, da der Dickeneinfluß einer Profilierung nur geringen Einfluß auf die Strömung hätte. Wie beim Wirbelkammerabscheider 12 sind auch hier die Strömungsleitlamellen 57 spiralig oder logarithmisch spiraliggekrümmt. Die Einstellung auf jedem Leitschaufelkranz 59 zur Ausbildung einer rotationssymmetrischen spiraligen Primärströmung erfolgt entsprechend den jeweiligen örtlichen Bezugsradien. Die für die Strömungsleitlamellen 57 angestrebten Spiralkrümmungen können auch hier durch Kreisbögen angenähert werden.

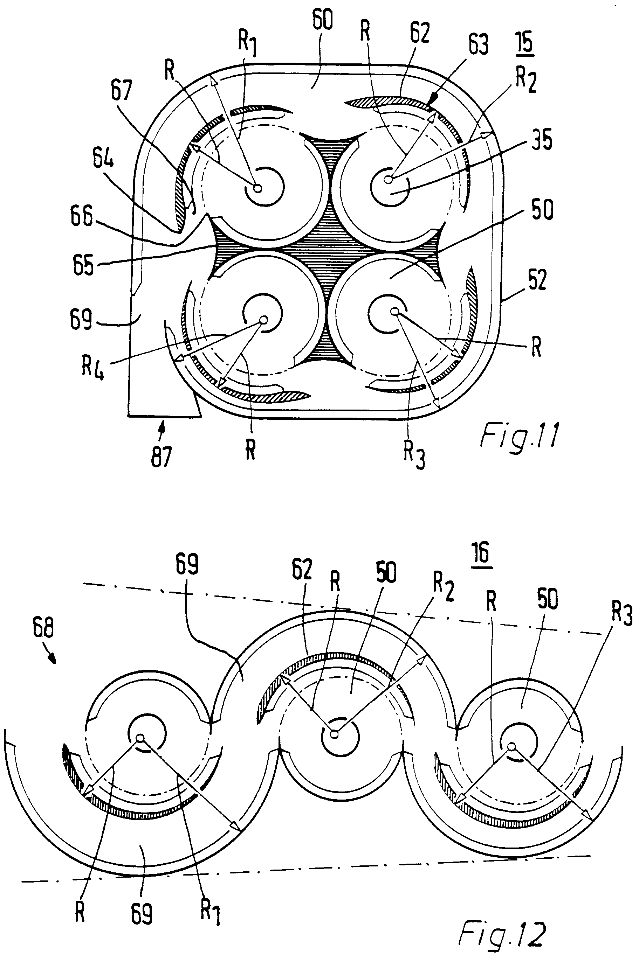

Es ist auch möglich, mehrere Wirbelkammern 50 in kompakter Anordnung zu einem Wirbelkammerabscheider zu verbinden. In Fig. 10 ist ein Wirbelkammerabscheider 14 dargestellt, der drei Wirbelkammern 50 aufweist, die in einem gemeinsamen Abscheidergehäuse 52 angeordnet sind. Der Hauptströmungskanal 69 ist um die Wirbelkammern 50 geführt, wobei sich der Strömungsquerschnitt des Hauptströmungskanals 69 aus Gründen der Kontinuität in Strömungsrichtung abschnittsweise nach jeder Wirbelkammer 50 vermindert. Im Bereich der Strömungsumlenkungen des Hauptgasstromes 60 sind gekrümmte Leitbleche 61 oder Leitprofile 62 mit gegebenenfalls einer Dickenverteilung angeordnet. Die Leitbleche 61 oder Leitprofile 62 sind spiralig oder logarithmisch spiraliggekrümmt, können jedoch auch kreisbogenförmig ausgebildet und spiralig angestellt sein. Der in Fig. 11 als Kompaktanordnung von vier Wirbelkammern 50 dargestellte Wirbelkammerabscheider 15 weist ebenfalls einen umlaufenden Hauptgasstrom 60 auf. Im Bereich der Strömungsumlenkungen des Hauptgasstroms 60 sind wie bei dem Wirbelkammerabscheider 14 Leitprofile 62 angeordnet. Diese sind so ausgebildet, daß die dem jeweiligen Wirbel 54 zugewandte Fläche des entsprechenden Leitprofils 62 spiralig gekrümmt und die konvexe Außenfläche 63 des Leitprofils 62 kreisbogenförmig gekrümmt ist. Die Nasen 64 der Leitprofile 62 sind so geformt, daß für jede Wirbelkammer 50 mit der Leitfläche 65 zur Abströmkante 66 ein Einströmabschnitt 67 mit sich in Strömungsrichtung verringerndem Querschnitt ausgebildet ist. Die Kompaktanordnung der Wirbelkammerabscheider 14 und 15 kann insoweit variiert werden, als die jeweils in Strömungsrichtung letzte Wirbelkammer 50 als Direktabscheider mit einem Strömungseintritt ausgebildet sein kann. Da an diesem kein Restrohgasaustritt mehr erfolgt, liegt in einem solchen Fall keine umlaufende Verteilerströmung vor. Durch entsprechende geometrische Ausbildung der Wirbelkammer sowie der Tauchrohre 35 st es möglich, die Wirbelkammerabscheider 14, 15 für den jeweiligen Anwendungsfall angepaßt hinsichtlich ihrer Abscheideleistungen und der gewünschten Druckverlustverminderung zu optimieren.

Die Wirbelkammern 50 können auch direktabscheidend in verschiedener Geometrie als Reihenschaltung miteinander verbunden werden. Vorteilhaft sind z. B. geschlossene Wirbelkammerreihen aus direktabscheidenden Wirbelkammern 50 mit einem Direktabscheider als Endabscheider. Wenn auf den Direktendabscheider verzichtet wird, bilden die dann noch in einer Reihe befindlichen direktabscheidenden Wirbelkammern 50 eine offene direktabscheidende Wirbelkammerelementarreihe mit Restrohgasaustritt. Bei diesen direktabscheiden den Wirbelkammerreihen besteht der Vorteil niedriger und konstanter oder weitgehend konstanter Einzelreingasstaubgehalte und konstanter oder weitgehend konstanter Restrohgasstaubgehalte der Einzelwirbelkammern. Durch entsprechende Auslegung können die Einzelrestrohgasstaubgehalte in Hauptströmungsrichtung noch vermindert werden. Einen besonderen Vorteil baulicher Vereinfachung ohne Strömungsstörung der Wirbelkammern bietet der Wirbelkammerabscheider 16, der als Reihenschaltung 68 von Wirbelkammern 50 ausgebildet ist (Fig. 12). Die Wirbelkammern 50 sind gleich und so ausgerichtet, daß ihre Mittelachsen auf gleicher Ebene zueinander fluchten. Der Hauptströmungskanal 69 ist von der jeweiligen Wirbelkammer durch ein Leitprofil 62 mit einem Kontaktbogenwinkel von ca. 180° distanziert. Der freie Strömungsabschnitt des Hauptströmungskanals 69 verringert sich kontinuitätsmäßig nach jeder Wirbelkammer 50. Bei der Reihenschaltung 68, die als offene Elementreihenschaltung ausgebildet ist, sind die Leitprofile 62 an der konkaven Seite spiralig gekrümmt und an der konvexen Seite kreisbogenförmig gekrümmt ausgebildet. Da sich der Querschnitt des Hauptströmungskanals 69 in Strömungsrichtung verringert, ist die Wirbelkammerreihe keilförmig ausgebildet, was konstruktiv nutzbare Vorteile bietet.

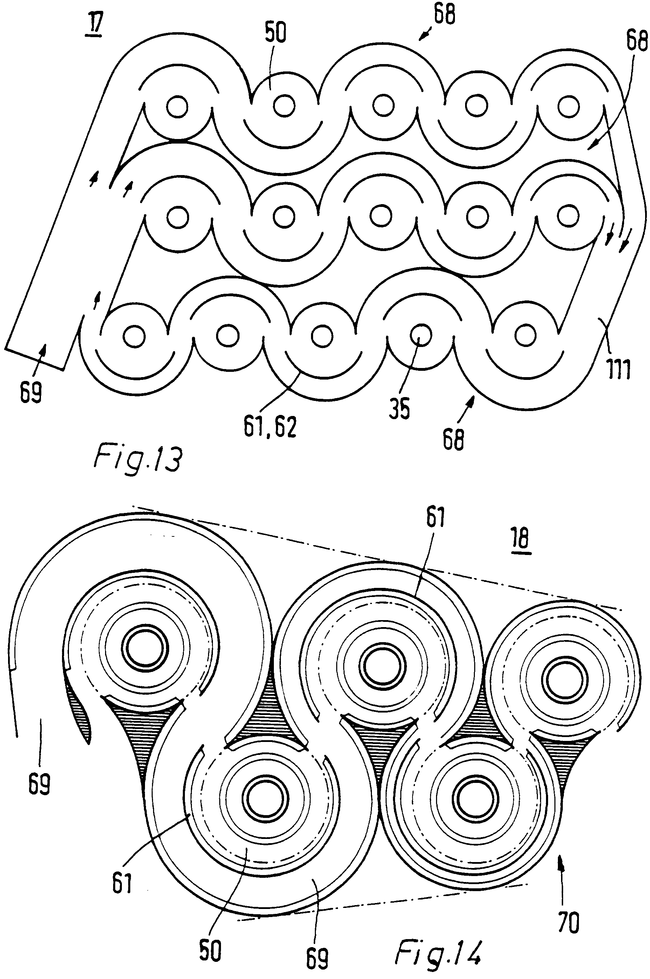

Der Wirbelkammerabscheider 17 nach Fig. 13 besteht aus drei Reihenschaltungen 68, von denen zwei parallel zueinander angeordnet sind, während die dritte entgegengesetzt ausgerichtet ist. Der Hauptströmungskanal 69 mündet in zwei Reihenschaltungen 68, die gemeinsam in einen Rückführkanal 111 münden. Von diesem wird die dritte Reihenschaltung beaufschlagt, deren Ausgang mit dem Hauptströmungskanal 69 verbunden ist. Statt einer Umlaufschaltung kann der Wirbelkammerabscheider 17 auch so variiert werden, daß lediglich zwei oder aber auch drei parallel geschaltete Reihenschaltungen 68 ausgangsseitig mit einer weiteren Reihenanordnung verbunden sind. Als vorteilhaft hat sich die Verwendung von Elementreihen erwiesen, bei denen 50% des Rohgasvolumenstromes in Reingas umgewandelt wird. Auch bei dem Wirbelkammerabscheider 17 können Austragsspalte 78 vorgesehen sein.

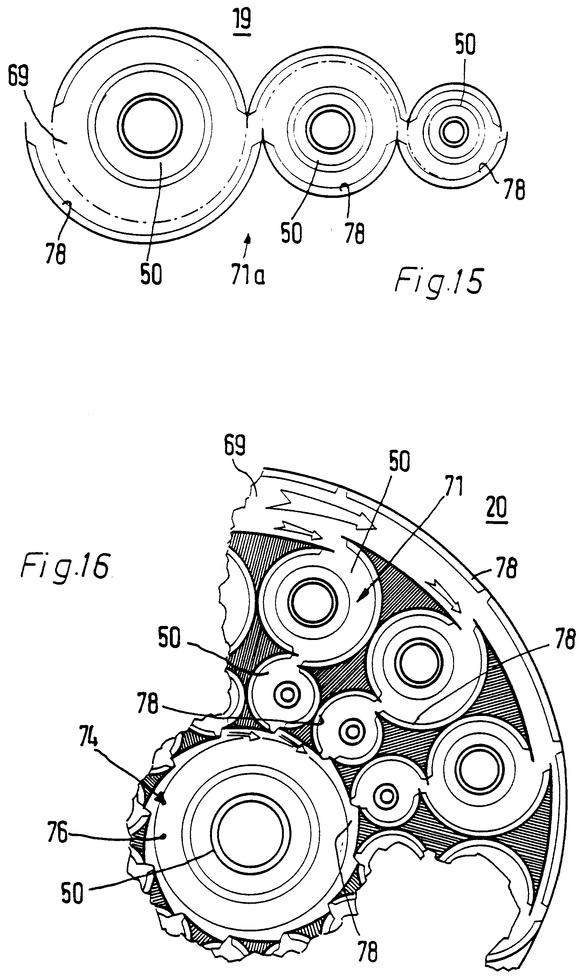

Aus der Reihenschaltung 68 mit direktabscheidenden Wirbelkammern 50 kann auch die in Fig. 14 dargestellte weitere Elementarreihe gebildet werden. Bei dieser ist der jeweilige Kontaktbogenwinkel größtmöglichst ausgebildet. Hierdurch liegen die Wirbelkammern 50 dann an einem schlaufenförmig geführten Hauptströmungskanal 69 in dichter Packung. Die verlorenen Bauvolumina sind bei dieser Ausführungsform relativ gering. Statt der bei den Wirbelkammern 50 der Reihenschaltung 70 vorgesehenen Leitbleche 61 können auch Leitprofile 62 verwendet werden. Ferner ist es möglich, die Reihenschaltung 70 für sich als kompakten Wirbelkammerabscheider 18 einzusetzen. Fig. 15 zeigt eine weitere Ausbildung eines Wirbelkammerabscheiders 19, der aus drei in Reihe geschalteten Wirbelkammern 50 mit abnehmendem Durchmesser besteht. Eine derartige Reihenschaltung 71a von Wirbelkammern 50 kann verschiedenartig zur Ausbildung von Apparaten oder Anlagen mit kreisförmig parallel geschaltet in Kreissektoren angeordneten Elementarreihen dienen.

Bei dem in Fig. 16 dargestellten Wirbelkammerabscheider 20 sind zwischen einem äußeren kreisringförmig angeordneten Hauptströmungskanal 69 und einer mittigen Wirbelkammer 50, die als Endabscheider 74 ausgebildet sein kann, zyklisch radial Reihenschaltungen 70 von zwei Wirbelkammern 50 angeordnet. Der Hauptströmungskanal 69 kann an einer Reihenschaltung 71 enden oder aber so ausgebildet sein, daß eine umlaufende Verteilerströmung entsteht. An den konkaven Strömungseckenzonen des Hauptströmungskanals 69 können Austragspalte 78 vorgesehen sein, ebenso in den Wirbelkammern 50. Besonders vorteilhaft ist es, daß bei zyklischen Parallelschaltungen der Wirbelkammerelementarreihen eine strömungsgünstige und raumsparende Kopplungsmöglichkeit mit einem einzigen Endabscheider gegeben ist, der z. B. ein Spiraldirektabscheider 76 sein kann. Dieser ist hinsichtlich seines Hauptströmungskanals 69 so ausgebildet, daß eine Mehrfachdrehimpulseinleitung möglich ist. Der Wirbelkammerabscheider 20 zeichnet sich durch eine besonders kompakte Bauart aus und kann aus genormten Bauelementen bei nur geringem verlorenen Bauvolumen hergestellt werden.

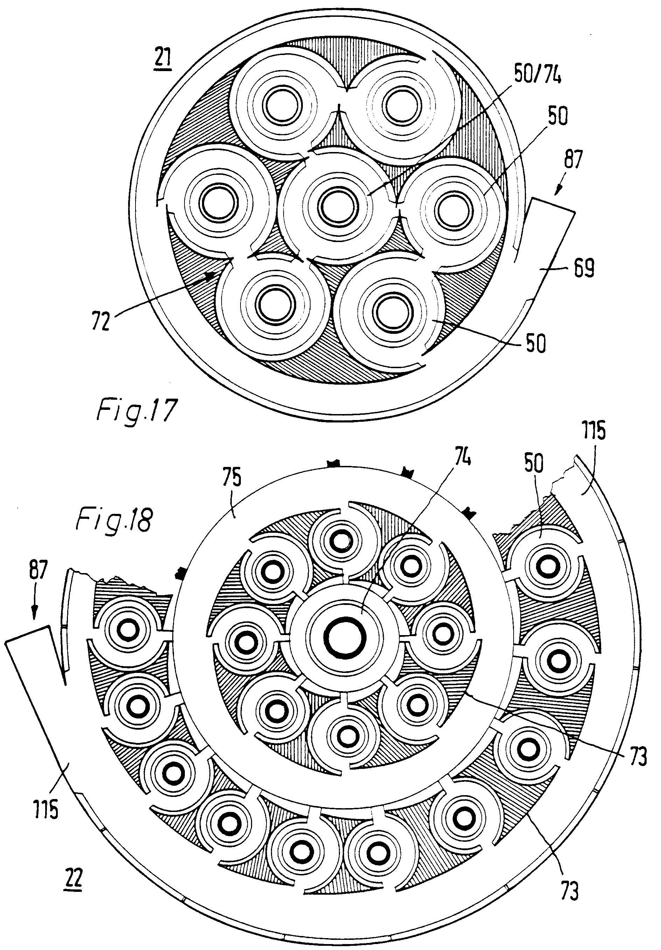

Es ist auch möglich, einen Wirbelkammerabscheider 21 so auszubilden, daß eine Anzahl von Reihenschaltungen 72 gleicher Wirbelkammern 50 zyklisch peripher parallel geschaltet sind (Fig. 17). Ausgangsseitig sind die Reihenschaltungen 72 mit einer Wirbelkammer 50 als Endabscheider 74 verbunden. Dieser Endabscheider kann auch als Spiraldirektabscheider 76 ausgebildet sein. Der Hauptströmungskanal 69 ist kreisförmig um die Anordnung der Reihenschaltungen 72 geführt, so daß eine Umlaufströmung erzielt wird. Die Wirbelkammerreihen 72 können aus direktabscheidenden Wirbelkammern 50 bestehen.

Der Wirbelkammerabscheider 22 nach Fig. 18 besteht aus zwei konzentrisch zueinander angeordneten Wirbelkammerringstufen 73, die außenseitig von dem Verteilerkanal 115 umgeben sind. Die äußere Wirbelkammerringstufe 73 weist parallel zueinander angeordnete Wirbelkammern 50 auf, die innenseitig an einen Zwischenverteilerkanal 75 angeschlossen sind. Über diesen stehen die Wirbelkammern 50 der inneren Wirbelkammerringstufe 73 mit dem Endabscheider 74 in Verbindung. Dieser Wirbelkammerabscheider 22 ist durch die Vielzahl der möglichen Zusammenschaltungen von Wirbelabscheidern mit Wirbelkammern 50 außerordentlich flexibel in der Anpassung an die jeweiligen Einsatzzwecke. So ist es nicht erforderlich, jede Wirbelkammerringstufe 73 in vollem Umfang mit Wirbelkammern 50 zu belegen. Es können vielmehr auch statt einzelner Wirbelkammern 50 Blindstücke oder Blindringelemente eingesetzt werden, die nicht näher dargestellt sind. Es ist daher möglich, nach dem Prinzip des Wirbelkammerabscheiders 22 zyklische Baukastensysteme mit Normteilen zu schaffen.

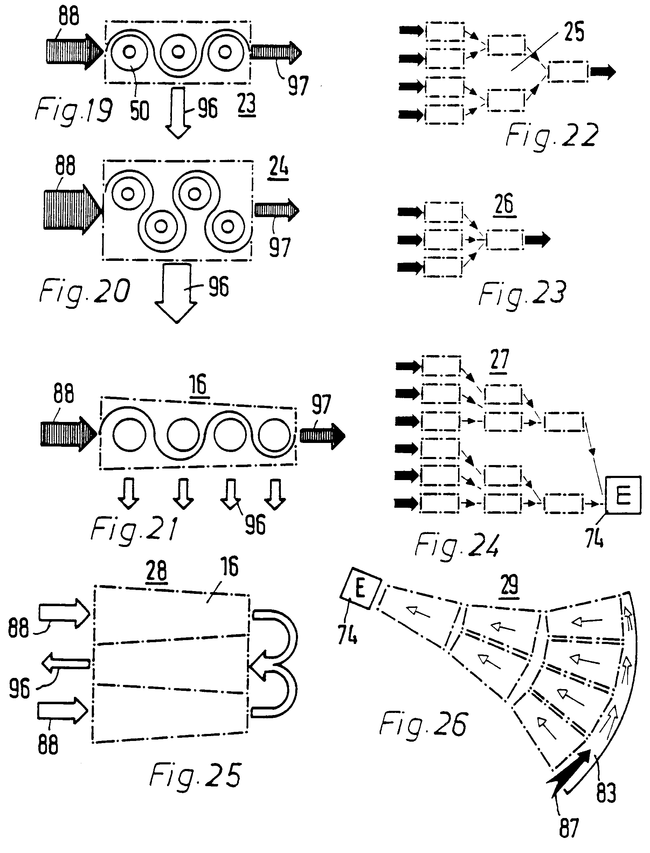

In den Fig. 19 bis 27 sind verschiedene Wirbelkammerabscheider 16 und 23 bis 30 dargestellt, die aus unterschiedlichen Schaltungen von Wirbelkammern 50 bestehen. Die Wirbelkammerabscheider 23, 24, 16 sind als Elementarreihen von Wirbelkammern 50 symbolisiert dargestellt wobei der eintretende Rohgasvolumenstrom 88 und das austretende Restrohgas 97 durch Pfeile dargestellt sind. In Fig. 21 ist am Beispiel des Wirbelkammerabscheiders 16 das kontinuitätbedingte keilförmige Zusammenlaufen der Elementarreihenbegrenzungen dargestellt.

Mit Elementarreihen von Wirbelkammern 50 wie in Fig. 19, 20, 21 dargestellt können Gruppenschaltungen unterschiedlicher Art vorgenommen werden, die zu Wirbelkammerabscheidern entsprechend der in Fig. 22 bis 27 angedeuteten Art führen. Die Gruppierungsverhältnisse sind vom Gesamtabsaugverhältnis der jeweiligen Elementarreihe von offenen einfachen oder direktabscheidenden Wirbelkammern 50 abhängig. Die Gruppenschaltungen ermöglichen den Vorteil, daß zur Anlagengestaltung normierte Elementarreihen von Wirbelkammern 50 verwendet werden können.

Bei der in Fig. 22 symbolisiert dargestellten Gruppenschaltung liegt ein Gruppierungsverhältnis von 2:1 vor. Zwei baugleiche Wirbelkammerelementarreihen sind auf eine nachfolgende ebenfalls baugleiche Wirbelkammerelementarreihe geschaltet. Das Gesamtabsaugverhältnis der Wirbelkammerelementarreihe beträgt 0,5 oder 50%. Bei der in Fig. 23 dargestellten Gruppenschaltung liegt ein Gruppierungsverhältnis von 3:1 vor bei einem Gesamtabsaugverhältnis der Wirbelkammerelementarreihe von 1/3. In Fig. 24 ist eine weitere Gruppenschaltung symbolisch dargestellt, bei der ein Gruppierungsverhältnis von 3:2 bei zwei Stufen vorliegt. Das Gesamtabsaugverhältnis der Wirbelkammerelementarreihe beträgt 2/3.

Wie in Fig. 24 dargestellt, ist es möglich, unterschiedliche Gruppierungsverhältnisse von Wirbelkammerelementarreihen innerhalb einer Anlage oder eines Multiwirbelkammersystems anzuwenden. Bei dem Wirbelkammerabscheider 27 nach Fig. 24 werden die in Stufen abnehmenden Elementarreihenschaltungen am Ende auf einen Endabscheider geschaltet, der ein Spiraldirektabscheider 76 oder aber auch ein anderer Direktabscheider sein kann. So ist es beispielsweise auch möglich, als Endabscheider einen Gewebe- oder Elektrofilter zu verwenden, die aufgrund des vorgehenden Reinigungsprozesses relativ klein ausgebildet werden können. Der Restvolumenstrom der letzten Stufe bei direktabscheidenden Wirbelkammerelementarreihen kann auch zum Gesamtrohgaseintritt zurückgeführt werden. Ebenso kann der Rückführvolumenstrom zwischen zwei zu wählenden Stufen von Wirbelkammerelementarreihen eingeleitet werden. Es sind somit sowohl Umlaufschaltungen wie auch Teilumlaufschaltungen möglich.

In den Fig. 25 bis 27 sind mit den Wirbelkammerabscheidern 28, 29, 30 Stufenanordnungen von Wirbelkammerelementarreihen dargestellt, bei denen das kontinuitätsbedingte keilförmige Zusammenlaufen des Elementarreihengehäuses wie in Fig. 21 dargestellt für Kompaktbauweisen ausgenutzt wird. Von einem äußeren Gesamtrohgaseintrittskanal 83 wird das zu reinigende Gas stufenweise über verschiedenen Elementarreihen von Wirbelkammern 50 jeweils einem Endabscheider 74 zugeführt, der, wie oben beschrieben, als Spiralabscheider 76 od.dgl. ausgebildet sein kann.

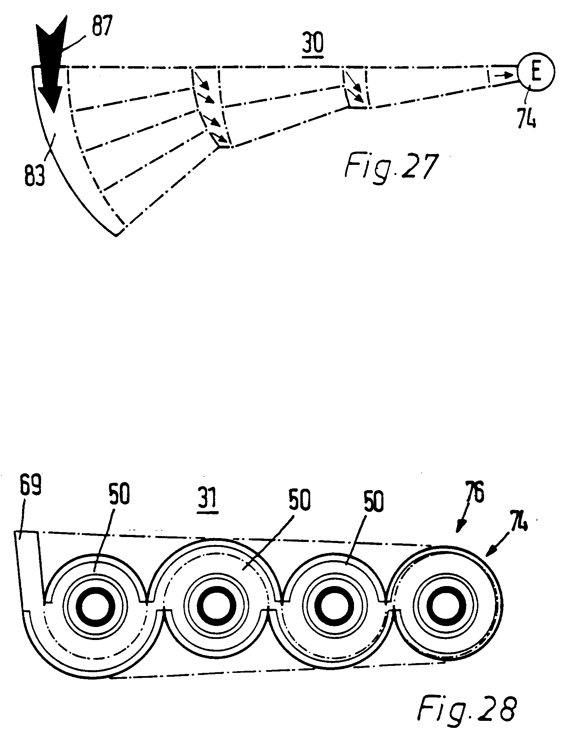

Fig. 28 zeigt als Wirbelkammerabscheider 3 eine geschlossene direktabscheidende Wirbelkammerelementarreihe mit einem eingangsseitigen Hauptströmungskanal 69, drei Wirbelkammern 50 sowie einen als Spiraldirektabscheider 76 ausgebildeten Endabscheider 74. Dieser Wirbelkammerabscheider 31 kann auch mit Leitblechen 61 oder Leitprofilen 62 im Bereich der Wirbelkammern 50 versehen werden.

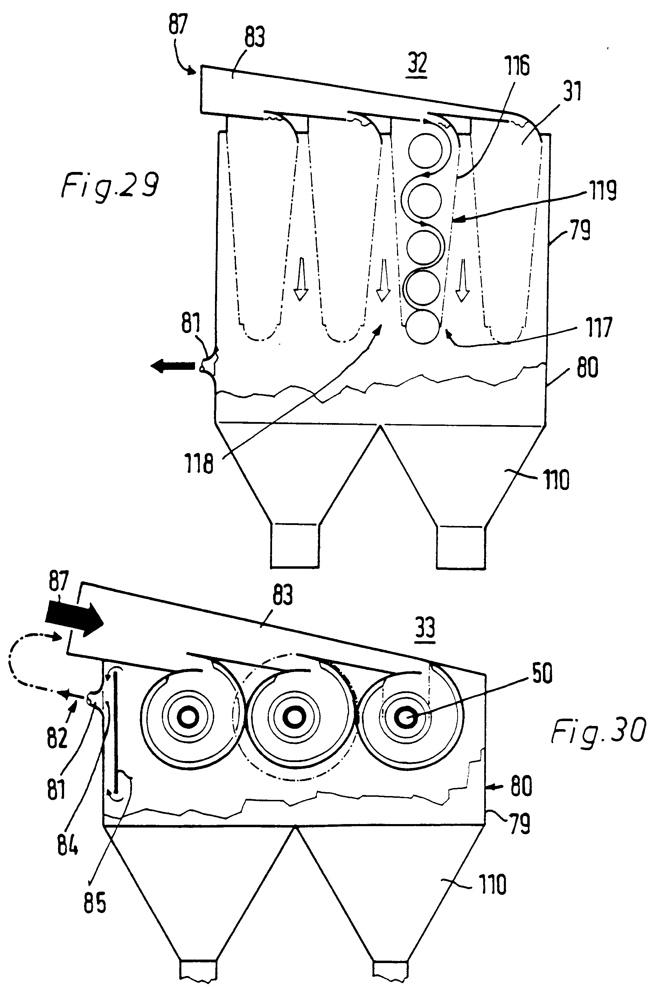

In Fig. 29 ist eine Entstaubungsanlage 32 dargestellt, die aus einer Parallelschaltung von geschlossenen direktabscheidenden Wirbelkammerelementarreihen 119 entsprechend des Wirbelkammerabscheiders 31 und einem Staubbunker 80 besteht. Jede Wirbelkammerelementarreihe 119 besteht aus einer Reihenschaltung 68, 71, 71a von Wirbelkammern 50, die so ausgebildet ist, daß deren Gehäuse 116 sich zum austrittsseitigen Endabschnitt aus Kontinuitätsgründen keilförmig verjüngen. Die einzelnen Wirbelkammerelementarreihen sind so an dem Gesamtrohgaseintrittskanal 83 parallel zueinander angeschlossen, daß die Zwischenräume 118 zwischen den einzelnen Wirbelkammerelementarreihen 119 sich zu deren Endabschnitten 117 ebenfalls keilförmig erweitern. Durch den hierdurch erzielten Freiraum wird die Funktion der Bunkerabsaugvorrichtung 81 unterstützt, die an dem Staubbunker 80 ausgebildet ist. Der Staubbunker 80 ist durch ein Gehäuse 79 gebildet, an dessen unterem Abschnitt Trichter 110 angeordnet sind. Über diese Trichter kann der im Gehäuse 79 angefallene Staub abgeführt werden. An der einen Seitenwand 35 des Gehäuses 79 ist die Bunkerabsaugvorrichtung 81 vorgesehen. Mittels dieser wird ein kleinerer Volumenstrom aus dem Staubbunker 80 abgesaugt um in den nicht näher dargestellten Austragsspalten 78 der direktabscheidenden Wirbelkammerelementarreihen eine Austragsströmung zu erzeugen. Durch diese wird der Staubaustrag aus den jeweiligen Wirbelkammern 50 und damit ihre Abscheideleistung verbessert. Das keilförmige Zusammenlaufen der Gehäusebegrenzungen der Elementarreihen ermöglicht keilförmige Zwischenräume zwischen den einzelnen Wirbelkammerabscheidern 31 wodurch die durch die Bunkerabsaugung initierte Spaltaustragströmung vergleichmäßigt wird.

Bei der in Fig. 30 dargestellten Entstaubungsanlage 33 sind an einem Gesamtrohgaseintrittskanal 83 drei Spiraldirektabscheider 76 angeschlossen. An dem Gehäuse 79 des Staubbunkers 80 ist eine Bunkerabsaugvorrichtung 81 vorgesehen, deren Strömungsausgang 82 mit dem Gesamtrohgaseintrittskanal 83 im Bereich des Rohgaseintritts 87 verbunden ist. Vor der Ansaugöffnung 84 der Bunkerabsaugvorrichtung 81 ist ein Prallabscheider 85 vorgesehen. Durch diesen plattenförmigen Prallabscheider 85 wird der Staubgehalt des durch die Bunkerabsaugvorrichtung 81 aus dem Staubbunker 80 abzusaugenden Volumenstromes vermindert. Die Abtrennwirkung des Prallabscheiders 85 wird durch die stark gekrümmte Strömungsumlenkung an den Plattenrändern erzielt.

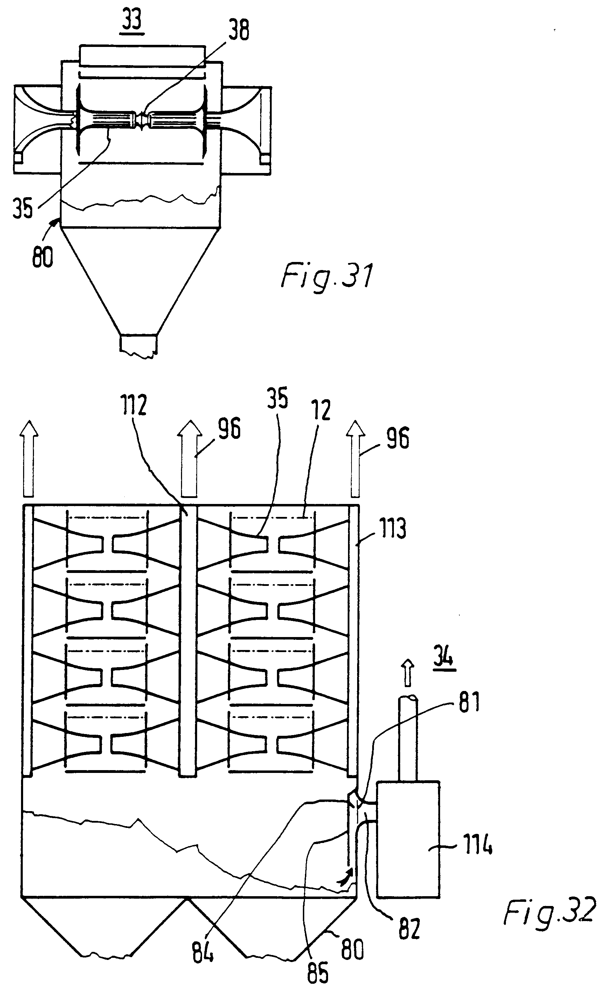

Bei der in Fig. 31 dargestellten Entstaubungsanlage 33 kann eine Direktabscheideanlage entsprechend der Entstaubungsanlage 32, 33 vorgesehen sein, bei der die außerhalb des Abscheidergehäuses 52 befindlichen Dralldiffusoren der Tauchrohre 35 in einfach zu erstellenden äußeren Absauge-sammelgehäusen für den Reingasvolumenstrom 96 enden.

Bei der in Fig. 32 dargestellten Entstaubungsanlage 34 sind horizontal orientierte übereinander und nebeneinander liegende parallel geschaltete direktabscheidende Wirbelkammerelementarreihen vorgesehen. Die Dralldiffusoren der Tauchrohre 35 münden in kastenförmigen inneren Sammelkanälen 112, 113 die zur Ableitung des Reingasvolumenstroms 96 dienen. Bei der Entstaubungsanlage 34 ist eine Bunkerabsaugvorrichtung 81 vorgesehen, deren Ansaugöffnung 84 von einem Prallabscheider 85 abgedeckt ist. Dieser Prallabscheider 85 ist als Abschirmblech so ausgebildet,daß der Bunkerabsaugvolumenstrom zum Austritt aus dem Staubbunker 80 besonders umgelenkt werden muß.Am Strömungsausgang 82 der Bunkerabsaugvorrichtung 81 ist ein Kleinstabscheider 114 vorgesehen,der zur Entstaubung des Bunkerabsaugvolumenstroms dient.Der Kleinstabscheider 114 kann ein Spiraldirektabscheider 76 sein.

## Patentansprüche

1. Wirbelkammerabscheider zum Trennen und/oder Abscheiden von festen und/oder flüssigen Partikeln (disperse Phase) aus gasförmigen und/oder flüssigen Medien (kontinuierliche Phase) sowie zum Trennen von gemischten Gasen (Gas-Gas-Trennung) und/oder gemischten Flüssigkeiten (Flüssig-Flüssig-Trennung) sowie zum Sichten und/oder Klassieren, mit mindestens einer Wirbelkammer (50) mit allgemein zylindrischer Wandkrümmung mit einer scharfen Abströmkante (66) am Eingang des Hauptströmungskanals (69) in die Wirbelkammer (50) und jeweils zwei Tauchrohren (35), die koaxial zueinander und parallel zur Abströmkante (66) in der Wirbelkammer (50) angeordnet sind, sich jeweils von deren Endwänden aufeinander zuerstrecken und mit einem Reingasauslaß in Verbindung stehen und einen sich erweiternden Auslauf aufweisen, wobei in dem Wirbelkammerabscheider ein Fliehkraftfeld erzeugt wird, aus dem der spezifisch leichtere Anteil durch die zwei in den Wirbelkammerabscheider spiegelbildlich zu deren Mittelebenen hineinragende Tauchrohre (35) innerhalb des Zentralbereichs des Wirbelkammerabscheiders abgesaugt und bei der Drehimpulseinleitung die Kontaktzone zwischen der Hauptströmung und dem Wirbel so zur festen Zylindermantelbegrenzung eingestellt wird, daß der tangentiale Eintrittsimpuls in die Bodenschichtströmung durch Verkleinerung des in der Wirbelkammer (50) sekundär zirkulierenden Impulsanteils der Bodenschichtströmung vergrößert wird, die Bodenschichtströmung rotationssymmetrisch bei konstanter oder annähernd konstanter mittlerer Hauptströmungsgeschwindigkeit ausgebildet wird, die Wandschichtströmung des Wirbels in der Wirbelkammer (50) und der Hauptströmung im Hauptströmungskanal (69) der Abströmkante (66) so konkav gekrümmt zugeführt werden, daß die senkrechten Sekundärgeschwindigkeiten beidseitig der Abströmkante (66) gleichsinnig gerichtet und örtlich gleich groß sind, und wobei der Reingasstrom durch die Tauchrohre (35) so zugeführt wird, daß in Zonen höchster Strömungsgeschwindigkeit die Strömung nur mit schwachen Meridianflußumlenkungen belastet und wobei der Reingasstrom an der Außenwand der Tauchrohre (35) mit zu den Einlaßabschnitten steigender Geschwindigkeit geführt wird, wobei in den Tauchrohren (35) eine Ringströmung erzeugt wird, die in der Austrittszone der Tauchrohre (35) nach Umlenkung durch Leitschaufeln in eine Quellströmung mit geringer Strömungsgeschwindigkeit am Austritt umgewandelt wird, dadurch gekennzeichnet, daß der Mantel (90) des Hauptströmungskanals (69) spiralig gekrümmt ist und die der Abströmkante (66) vom Hauptströmungskanal (69) zugeführte Wand eine konkave zylindrische Form aufweist, der Rohgaseintritt (87) tangential zum Hauptströmungskanalboden (90) an der äußeren Gehäusewand der Wirbelkammer (50) ausgebildet ist, die Tauchrohre (35) gaseintrittsseitig einen zylindrischen Abschnitt aufweisen, dessen Querschnitt sich im Bereich vor den Wirbelkammerböden (91, 92) trompetenartig kontinuierlich bis zum Austrittsbereich (45) erweitert, wobei über dessen Umfang verteilt Umlenkschaufeln (47) angeordnet sind, mittels derer die im Erweiterungsabschnitt umfangs- und meridianmäßig verzögerte Tauchrohrinnenströmung entdrallbar ist.

2. Wirbelkammerabscheider nach Anspruch 1, dadurch gekennzeichnet, daß in den Tauchrohren (35) ein Tauchrohrkern oder Diffusorinnenkörper (38) angeordnet ist.

3. Wirbelkammerabscheider nach einem der Ansprüche 1 oder 2, dadurch gekennzeichnet, daß am Austrittsbereich (45) eines jeden Tauchrohres (35) ein Spiralgehäuse als Dralldiffusor angeordnet ist, in das der Diffusorinnenkörper (38) tangential einmündet.

4. Wirbelkammerabscheider nach Anspruch 3, dadurch gekennzeichnet, daß im Bereich der Einlaßöffnungen (40) der Tauchrohre (35) die Diffusorinnenkörper (38) mittels eines Leitkörpers (41) einstückig ausgebildet sind, an dem radial ein Wulst (42) mit den Tauchrohren (35) zugeordneten Strömungsleitflächen (43) angeordnet ist.

5. Wirbelkammerabscheider nach Anspruch 3, dadurch gekennzeichnet, daß das Spiralgehäuse sich in Strömungsrichtung diffusorartig erweiternd ausgebildet ist.

6. Wirbelkammerabscheider nach den Ansprüchen 1 und 2, dadurch gekennzeichnet, daß die Umlenkschaufeln (47) im Austrittsbereich (45) des durch den Diffusorinnenkörper (38) im Tauchrohr (35) gebildeten Ringspaltdralldiffusor (46) angeordnet sind.

7. Wirbelkammerabscheider nach einem der Ansprüche 1 bis 6, dadurch gekennzeichnet, daß vor dem Hauptströmungseintritt (51) des Wirbelkammerabscheidergehäuses (52) ein Vorabscheiderkanal (49) mit gegebenenfalls einem in Strömungsrichtung sich kontinuierlich verringernden Querschnitt angeordnet ist.

8. Wirbelkammerabscheider nach Anspruch 7, dadurch gekennzeichnet, daß der Vorabscheiderkanal (49) einen rechteckigen Querschnitt mit einer der Höhe der Wirbelkammer (50) entsprechenden Höhe aufweist und spiralförmig um die Wirbelkammer (50) geführt ist.

9. Wirbelkammerabscheider nach Anspruch 7, dadurch gekennzeichnet, daß im Bereich der für die Hauptströmung konkaven Eckenströmungszone in dem Mantel (53) des Vorabscheiderkanals (49) Austragsspalte (78) als Austragsöffnungen für Feststoffe ausgebildet sind.

10. Wirbelkammerabscheider nach einem der Ansprüche 1 bis 9, dadurch gekennzeichnet, daß in dem Wirbelkammerabscheidergehäuse (52) den Wirbel (54) umgebend ein Verteilergehäuse (55) mit mindestens einem dem Wirbel (54) zugeordneten sich über die Wirbelhöhe erstreckenden tangentialen Eintrittsspalt (56) ausgebildet ist.

11. Wirbelkammerabscheider nach Anspruch 10, dadurch gekennzeichnet, daß das Verteilergehäuse (55) aus allgemein kreisförmig angeordneten den Wirbel (54) umgebenden Strömungsleitlamellen (57) besteht, die zueinander jeweils versetzt unter Ausbildung eines Eintrittsspalts (56) angeordnet sind.

12. Wirbelkammerabscheider nach Anspruch 11, dadurch gekennzeichnet, daß die Strömungsleitlamellen (57) spiralig, gegebenenfalls logarithmisch spiralig, gekrümmt sind.

13. Wirbelkammerabscheider nach Anspruch 11, dadurch gekennzeichnet, daß die Strömungsleitlamellen (57) als kreisbogenförmige Zylindersegmentstücke ausgebildet sind.

14. Wirbelkammerabscheider nach Anspruch 13, dadurch gekennzeichnet, daß die kreisbogenförmigen Zylindersegmentstücke so ausgerichtet sind, daß die durch die Eintrittsspalte (56) geführten Teilströme spiralig oder logarithmisch spiralig geführt sind.

15. Wirbelkammerabscheider nach einem der Ansprüche 10 bis 14, dadurch gekennzeichnet, daß in radialer Richtung zur Mittelachse (58) des Wirbels (54) diesen umgebend mehrere kreisförmige Leitschaufelkränze (59) mit unterschiedlichen Bezugsradien und gleichmäßig verteilten gekrümmten Strömungsleitlamellen (57) angeordnet sind.

16. Wirbelkammerabscheider nach einem der Ansprüche 1 bis 15, dadurch gekennzeichnet, daß bei Ausbildung mehrerer Wirbelkammern (50) zu Kompaktanordnungen im Bereich von Strömungsumlenkungen des Hauptgasstroms (60) gekrümmte Leitbleche (61) bzw. Leitprofile (62) mit Dickenverteilung angeordnet sind.

17. Wirbelkammerabscheider nach Anspruch 16, dadurch gekennzeichnet, daß zur Ausbildung einer wellenförmigen Reihenschaltung (68) gleicher Wirbelkammern (50) der Hauptströmungskanal (69) von der jeweiligen Wirbelkammer (50) durch ein Leitblech (61) bzw. Leitprofil (62) distanziert ist.

18. Wirbelkammerabscheider nach einem der Ansprüche 1 bis 17, dadurch gekennzeichnet, daß an den zu den örtlichen Primärströmungszonen konkav gekrümmten Eckenzonen in den ebenen Gehäuseböden (86) des Wirbelkammerabscheidergehäuses (52) und Verteilergehäuses (55) Austragsspalte (78) für Feststoffe ausgebildet sind.

19. Wirbelkammerabscheider nach einem der Ansprüche 16 bis 18, dadurch gekennzeichnet, daß bei Anordnung von Wirbelkammern (50) in dem Gehäuse (79) eines Staubbunkers (80) in diesem eine Bunkerabsaugeinrichtung (81) ausgebildet ist, deren Strömungsausgang (82) unter Ausbildung einer Teilumlaufströmung mit dem Gesamtrohgaseintrittskanal (83) verbunden ist.

## Claims

1. Swirl chamber separator for separating and/or removing solid and/or liquid particles (disperse phase) from gas and/or liquid media (continuous phase) as well as for separating gas mixtures (gas-gas separation) and/or liquid mixtures (liquid-liquid separation) and for examination and/or classification purposes, having at least one swirl chamber (50) with a generally cylindrical wall curvature having a sharp diffuser edge (66) at the inlet of the main flow passage (69) into the swirl chamber (50) and having two respective submersed pipes (35), arranged, coaxially with one another and parallel with the diffuser edge (66), in the swirl chamber, which extend respectively from the end walls thereof towards one another, are connected to a clean gas outlet and have a widened mouth, whereby a centrifugal force is produced in the swirl chamber separator, from which the specifically lighter portion is sucked from within the central region of the swirl chamber separator out through the two submersed pipes (35) arranged in mirror image extending towards the central planes of the swirl chamber separator, and in which the contact zone between the main flow and the swirl is adjusted relative to the fixed confines of the cylindrical jacket by dint of the angular momentum of the discharge in such a way that the momentum on entry into the bottom flow at a tangent is increased as a result of the decrease in the secondary circulating momentum of the bottom flow, the bottom flow being formed symmetrically with the direction of rotation at constant or approximately constant mean speed of the main flow, the wall flow of the swirl in the swirl chamber (50) and the main flow in the main flow passage (69) of the diffuser edge (66) being delivered in a concave curve such that the vertical secondary speeds are directed equally in the same direction and to the same places on both sides of the diffuser edge (66) and whereby the clean gas flow is fed through the submersed pipes (35) in such a way that, in the zones with the highest flow speed, only weak tangential deflections are applied to the flow and whereby the clean gas flow at the outer wall of the submersed pipes (35) is conveyed at a speed that increases towards the inlet portions, whereby an annular flow is produced in the submersed pipes (35), which is deflected by means of deflector blades before being converted at the outlet zone of the submersed pipes (35) into a source flow having a low flow speed as it is discharged, characterised in that the casing (90) of the main flow passage (69) is spirally curved and the wall forming the diffuser edge (66) of the main flow passage (69) is of a concave cylindrical shape, the raw gas inlet (87) is arranged on the outer wall of the swirl chamber (50) housing at a tangent to the floor (90) of the main flow passage, the submersed pipes (35) have a cylindrical portion on the gas inlet side whose cross-section in the region before the swirl chamber floors (91, 92) widens continuously in the shape of a trumpet as far as the outlet region (45), having deflectors blades (47) distributed over the circumference thereof, by means of which the inner flow of the submersed pipes, slowed down circumferentially and meridian-wise in the widened portion, can be untwisted.

2. Swirl chamber separator as claimed in claim 1, characterised in that a pipe core or inner diffusor member (38) is arranged in the submersed pipes (35).

3. Swirl chamber separator as claimed in one of claims 1 or 2, characterised in that a spiral housing is arranged at the outlet region (45) of each of the submersed pipes (35) to form a helical diffusor, into which the inner diffusor member (38) opens at a tangent.

4. Swirl chamber separator as claimed in claim 3, characterised in that, in the region of the inlet orifices (40) of the submersed pipes (35), the inner diffusor members (38) are constructed in one piece by means of a guide body (41), on which a bead (42) is arranged radially with the surfaces providing a flow guide (43) for the submersed pipes (35).

5. Swirl chamber separator as claimed in claim 3, characterised in that, in the direction of flow, the spiral housing widens so as to act as a diffusor.

6. Swirl chamber separator as claimed in claims 1 and 2, characterised in that deflector blades (47) are arranged in the outlet region (45) of the annular helical diffusor (46) formed by the inner diffusor member (38) in the submersed pipe.

7. Swirl chamber separator as claimed in one of claims 1 to 6, characterised in that, a preliminary separator passage (49) with a cross-section that continuously decreases in the direction of flow, is arranged if necessary before the main flow inlet (51) of the swirl chamber separator housing (52).

8. Swirl chamber separator as claimed in claim 7, characterised in that the preliminary separator passage (49) has a rectangular cross-section of a height corresponding to the height of the swirl chamber (50) and feeds in a spiral shape around the swirl chamber (50).

9. Swirl chamber separator as claimed in claim 7, characterised in that discharge slots (78) are provided as outlet orifices for solids in the region of the concave corner flow zone for the main flow in the casing (53) of the preliminary separator passage (49).

10. Swirl chamber separator as claimed in one of claims 1 to 9, characterised in that in the swirl chamber separator housing (52), a distributor housing (55) is arranged surrounding the swirl (54) having at least one inlet slot (56) for the swirl (54) extending across the height of the swirl at a tangent.

11. Swirl chamber separator as claimed in claim 10, characterised in that the distributor housing (55) consists of flow guide laminae (57) arranged substantially in a circle surrounding the swirl (54), each being respectively offset from another to form an inlet slit (56).

12. Swirl chamber separator as claimed in claim 11, characterised in that the flow guide laminae (57) are spirally or, as is the case, logarithmically spirally, curved.

13. Swirl chamber separator as claimed in claim 11, characterised in that the flow guide laminae (57) are constructed as circular arc-shaped cylinder segment members.

14. Swirl chamber separator as claimed in claim 13, characterised in that the circular arc-shaped cylinder segment members are arranged such that the partial flows fed through the inlet slits (56) are fed spirally or logarithmically spirally.

15. Swirl chamber separator as claimed in one of claims 10 to 14, characterised in that in the direction radial to the central axis (58) of the swirl (54), several circular-shaped guide blade rings (59) are arranged surrounding the latter having varying reference radii and evenly distributed curved flow guide laminae (57).

16. Swirl chamber separator as claimed in one of claims 1 to 15, characterised in that if several swirl chambers (50) are arranged to form a compact configuration, curved guide plates (61) or guide profiles (62) with a varying distribution of thickness are arranged in the regions in which the main gas flow (60) is deflected.

17. Swirl chamber separator as claimed in claim 16, characterised in that to form a wave-shaped series (68) of identical swirl chambers (50), the main flow passage is spaced at a distance from the respective swirl chamber (50) by means of a guide plate (61) or guide profile (62).

18. Swirl chamber separator as claimed in one of claims 1 to 17, characterised in that discharge slits (78) for solids are arranged at the corner zones, concavely curved with respect to the local primary flow zones, in the flat housing floors (86) of the swirl chamber separator housing (52) and distributor housing (55).

19. Swirl chamber separator as claimed in one of claims 16 to 18, characterised in that if a configuration of swirl chambers (50) is arranged in the housing (79) of a dust bunker (80), a bunker suction device (81) is arranged therein, whose flow outlet (82) connects with the raw gas inlet passage (83) as a whole, forming a partial flow circulation.

## Revendications

1. Séparateur à chambre de tourbillonnement pour séparer et/ou extraire des particules solides et/ou liquides (phase dispersée) de milieux gazeux et/ou liquides (phase continue) ainsi que pour séparer des gaz mixtes (séparation gaz-gaz) et/ou des liquides mixtes (séparation liquide-liquide) et pour classer et/ou classifier, avec au moins une chambre de tourbillonnement (50) munie d'une courbure de paroi généralement cylindrique avec une arête vive d'écoulement (66) à l'entrée du canal d'écoulement principal (69) dans la chambre de tourbillonnement (50) et à chaque fois deux tubes plongeurs (35) qui sont disposés coaxialement l'un par rapport à l'autre et parallèlement à l'arête d'écoulement (66), dans la chambre de tourbillonnement (50), qui s'étendent à chaque fois l'un sur l'autre à partir des parois finales de celle-ci, qui sont reliés à un échappement de gaz purifié et présentent une sortie évasée, un champ de force centrifuge étant produit dans le séparateur à chambre de tourbillonnement, champ hors duquel la composante spécifiquement plus légère est aspirée à l'intérieur de la zone centrale du séparateur à chambre de tourbillonnement par les deux tubes plongeurs (35) pénétrant dans le séparateur à chambre de tourbillonnement de façon inversée par rapport à leur plan médian et la zone de contact étant réglée, lors du déclenchement du moment angulaire, entre l'écoulement principal et le tourbillon pour une limitation fixe du corps du cylindre de façon à augmenter l'impulsion tangentielle d'entrée dans l'écoulement de la couche de fond par diminution de la composante d'impulsion de l'écoulement de la couche de fond, composante circulant de façon secondaire dans la chambre de tourbillonnement (50), l'écoulement de la couche de fond étant conçu avec symétrie de rotation pour une vitesse moyenne d'écoulement principal constante ou approximativement constante, l'écoulement de la couche du tourbillon, sur la paroi, dans la chambre de tourbillonnement (50) et l'écoulement principal dans le canal d'écoulement principal (69) de l'arête d'écoulement (66) étant menés de façon si concave que les vitesses secondaires verticales sont dirigées dans le même sens des deux côtés de l'arête d'écoulement (66) et sont localement aussi élevées, le courant de gaz purifié étant acheminé à travers les tubes plongeurs (35) de façon à ce que, dans des zones de vitesse maximale d'écoulement, celui-ci ne soit chargé que de faibles déviations de flux méridien et le courant de gaz purifié étant guidé contre la paroi extérieure des tubes plongeurs (35) à une vitesse qui augmente aux sections d'admission, un écoulement annulaire étant produit dans les tubes plongeurs (35), écoulement annulaire qui est transformé dans la zone de sortie des tubes plongeurs (35), après déviation par des aubes directrices, en un écoulement de gonflement avec faible vitesse d'écoulement à la sortie, caractérisé en ce que l'enveloppe du canal d'écoulement principal (6) est incurvé en spirale et la paroi amenée à l'arête d'écoulement (66) à partir du canal d'écoulement principal (69) présente une forme cylindrique concave, en ce que l'entrée de gaz brut (87) est conçue de façon tangentielle par rapport au fond du canal d'écoulement principal (90), contre la paroi extérieure du carter de la chambre de tourbillonnement (50), en ce que les tubes plongeurs (35) présentent, du côté de l'entrée du gaz, une section cylindrique dont la section transversale s'évase dans la zone située devant les fonds de la chambre de tourbillonement (91, 92), comme une trompette et de façon continue jusqu'à la zone de sortie (45), des aubes de déviation (47) étant réparties au-dessus de la circonférence de celle-ci et permettant à l'écoulement de devenir irrotationnel à l'intérieur des tubes plongeurs, écoulement retardé dans la section évasée, périphériquement et de façon méridienne.

2. Séparateur à chambre de tourbillonnement selon la revendication 1, caractérisé en ce qu'un noyau ou des corps intérieurs de diffuseur (38) sont disposés dans les tubes plongeurs (35).

3. Séparateur à chambre de tourbillonement selon l'une des revendications 1 ou 2, caractérisé en ce que dans la zone de sortie (45) de chaque tube plongeur (35) est disposé un carter en spirale sous forme de diffuseur de giration dans lequel aboutit le corps intérieur de diffuseur (38).

4. Séparateur à chambre de tourbillonnement selon la revendication 3, caractérisé en ce que, dans la zone des ouvertures d'admission (40) des tubes plongeurs (35), les corps intérieurs de diffuseur (38) sont conçus en une pièce au moyen d'un corps conducteur (41) contre lequel est radialement disposé un renflement (42) avec des surfaces conductrices d'écoulement (43) affectées aux tubes plongeurs (35).

5. Séparateur à chambre de tourbillonnement selon la revendication 3, caractérisé en ce que le carter en spirale est conçu en s'évasant comme un diffuseur dans le sens de l'écoulement.

6. Séparateur à chambre de tourbillonnement selon les revendications 1 et 2, caractérisé en ce que les aubes de déviation (47) sont disposées dans la zone de sortie (45) du diffuseur de giration (46) formé par le corps intérieur du diffuseur (38) dans le tube plongeur (35).

7. Séparateur à chambre de tourbillonnement selon l'une des revendications 1 à 6, caractérisé en ce qu'un préfractionnateur (49) avec, le cas échéant, une section transversale qui se réduit de façon continue dans le sens de l'écoulement est disposé devant l'entrée de l'écoulement principal (51) du carter du séparateur à chambre de tourbillonnement (52).

8. Séparateur à chambre de tourbillonnement selon la revendication 7, caractérisé en ce que le préfractionnateur (49) présente une section transversale carrée avec une hauteur correspondant à la hauteur de la chambre de tourbillonnement (50) et est guidé en spirale autour de la chambre de tourbillonnement (50).

9. Séparateur à chambre de tourbillonnement selon la revendication 7, caractérisé en ce que, dans le secteur de la zone d'écoulement dans les angles, zone concave pour l'écoulement principal, dans l'enveloppe (53) du préfractionnateur (49), des fentes de déversement (78) se présentent sous la forme d'ouvertures de déversement pour des substances solides.

10. Séparateur à chambre de tourbillonnement selon l'une des revendications 1 à 9, caractérisé en ce que, dans le carter du séparateur à chambre de tourbillonnement (52), un carter distributeur (55) entourant le tourbillonnement (54) est conçu avec au moins une fente d'admission (56) affectée au tourbillonnement (54) et s'étendant tangentiellement au-dessus de la hauteur de tourbillonnement.

11. Séparateur à chambre de tourbillonnement selon la revendication 10, caractérisé en ce que le carter distributeur (55) se compose de lamelles conductrices d'écoulement (57) généralement disposées de façon circulaire, entourant le tourbillonnement (54) et qui sont disposées à chaque fois de façon décalée les unes par rapport aux autres avec formation d'une fente d'admission (56).

12. Séparateur à chambre de tourbillonnement selon la revendication 11, caractérisé en ce que les lamelles conductrices d'écoulement (57) sont incurvées en spirale et, le cas échéant, logarithmiquement en spirale.

13. Séparateur à chambre de tourbillonnement selon la revendication 11, caractérisé en ce que les lamelles conductrices d'écoulement (57) se présentent sous la forme de pièces segmentées cylindriques en forme d'arcs de cercles.

14. Séparateur à chambre de tourbillonnement selon la revendication 13, caractérisé en ce que les pièces segmentées cylindriques en forme d'arcs de cercles sont alignées de telle sorte que les courants partiels guidés par les fentes d'admission (56) sont guidés en spirale ou logarithmiquement en spirale.

15. Séparateur à chambre de tourbillonnement selon l'une des revendications 10 à 14, caractérisé en ce que plusieurs couronnes d'aubes directrices (59) circulaires avec différents rayons de référence et des lamelles conductrices d'écoulement (57) incurvées et régulièrement réparties sont disposées dans le sens radial par rapport à l'axe (58) du tourbillonnement (54) et en entourant celui-ci.

16. Séparateur à chambre de tourbillonnement selon l'une des revendications 1 à 15, caractérisé en ce que, lors de la formation de plusieurs chambres de tourbillonnement (50) en dispositions compactes dans la zone de déviations de l'écoulement du courant principal de gaz (60), des tôles conductrices (61) ou des profilés conducteurs (62) incurvés sont disposés et répartis en épaisseur.

17. Séparateur à chambre de tourbillonnement selon la revendication 16, caractérisé en ce que, pour former un montage en série (68) ondulatoire de chambres de tourbillonnement (50) semblables, le canal d'écoulement principal (69) est espacé de chaque chambre de tourbillonnement (50) par une tôle conductrice (61) ou un profilé conducteur (62).

18. Séparateur à chambre de tourbillonnement selon l'une des revendications 1 à 17, caractérisé en ce que des fentes de déversement (78) sont conçues pour des substances solides dans les zones angulaires incurvées de façon concave en direction des zones locales d'écoulement primaire, dans les fonds plans (86) du carter du séparateur à chambre de tourbillonnement (52) et du carter distributeur (55).

19. Séparateur à chambre de tourbillonnement selon l'une des revendications 16 à 18, caractérisé en ce que, lors de la disposition de chambres de tourbillonnement (50) dans le carter (79) d'une trémie à charbon pulvérisé (80), un dispositif d'aspiration (81) est conçu dans celle-ci, dispositif dont la sortie d'écoulement (82) est reliée au canal d'admission de l'ensemble du gaz brut (83), avec formation d'un écoulement de circulation partielle.
